Europäisches Patentamt

European Patent Office

Office européen des brevets

(19)

(11) Veröffentlichungsnummer: **0 243 687**
A2

# (12) EUROPÄISCHE PATENTANMELDUNG

(21) Anmeldenummer: 87104512.6

(22) Anmeldetag: 26.03.87

(51) Int. Cl.⁴: **H04N 11/06**

(30) Priorität: 26.04.86 DE 3614175

(43) Veröffentlichungstag der Anmeldung:
04.11.87 Patentblatt 87/45

(84) Benannte Vertragsstaaten:
FR GB IT NL

(71) Anmelder: ERNO Raumfahrttechnik⁻
Gesellschaft mit beschränkter Haftung
Hünefeldstrasse 1-5
D-2800 Bremen(DE)

(72) Erfinder: **Röh, Gerhard, Dipl.-Ing.**
Parkstrasse 13
D-2800 Bremen(DE)

(54) Farbfernsehsystem zur Aufnahme, Übertragung und Wiedergabe von Farbfernsehbildern.

(57) Die Erfindung bezieht sich auf ein Farbfernseh-system zur Aufnahme, Übertragung und Wiedergabe von Farbfernsehbildern. Das System ist besonders geeignet zur Aufnahme von Farbbilder im Weltraum und Wiedergabe auf Erden. Das System arbeitet ohne Farbhilfsträger und ist der Lage die Farben ohne Beeinträchtigung der Qualität auf dem Übertragungsweg und störende Nachzieheffekte bei der Wiedergabe zu erzeugen.

FIG. 2

EP 0 243 687 A2

## Farbfernsehsystem zur Aufnahme, Übertragung und Widergabe von Farbfernsehbildern

Die Erfindung bezieht sich auf ein Farbfernsehsystem nach dem Oberbegriff des Anspruchs 1.

Ein solches Farbfernsehsystem wird sur Aufnahme, Übertragung und Wiedergabe von Fernsehbildern benutzt, um zum Beispiel Farbfernsehbilder im Weltraum aufzunehmen und auf Erden wiederzugeben. Bei diesem unter der Bezeichnung "Sequential Color Transmission System" bekannten System werden die Signale eines Vollbildes als Signale von sechs Halbbildern der Grundfarben Rot, Grün und Blau aufgenommen und sequentiell zum Empfangsort übertragen. Da das Signal des einer Farbe zugeortneten Halbbildes eine Periodendauer von 16 ms hat, ergibt sich für ein Vollbild eine Periodendauer von 96 ms. Bei diesem System handelt es sich übertragungstechnisch um eine Schwarz/Weiß-Technik ohne Farbträger, was den Vorteil einer hohen Auflösung für die als Luminazsignale zu übertrageden Farbsignale hat, so daß die Farbsignale unverfälscht übertragen werden. Wegen der langen Übertragungsdauer treten aber bei Bildern mit sich schnell bewegenden Bildinhalten störende Farbnachzieheffekte auf.

Die Erfindung geht von dem bekannten Farbfernsehsystem aus und hat die Aufgabe, die störenden Farbnachziehfeffekte durch eine besondere Aufbereitung der Farbsignale zu vermeiden. Diese Aufgabe ist durch die Kennzeichenmerkmale des Anspruchs 1 gelößt. Weiterbildungen und vorteilhafte Ausgestaltungen der Erfindung sind den Unteransprüchen zu entnehmen.

Die Erfindung wird an Hand der beiligenden Zeichnung erläutert. Es zeigen:

Figur 1 das Seriensignal eines bekannten Farbfernsehsystems,

Figur 2 die erfindungsgemäße Erzeugung der Halbbildern zugeordneten Farbsignale aus dem Seriensignal,

Figur 3 eine Dekodierschaltung und

Figur 4 ein Blockschaltbild zum Interpolieren.

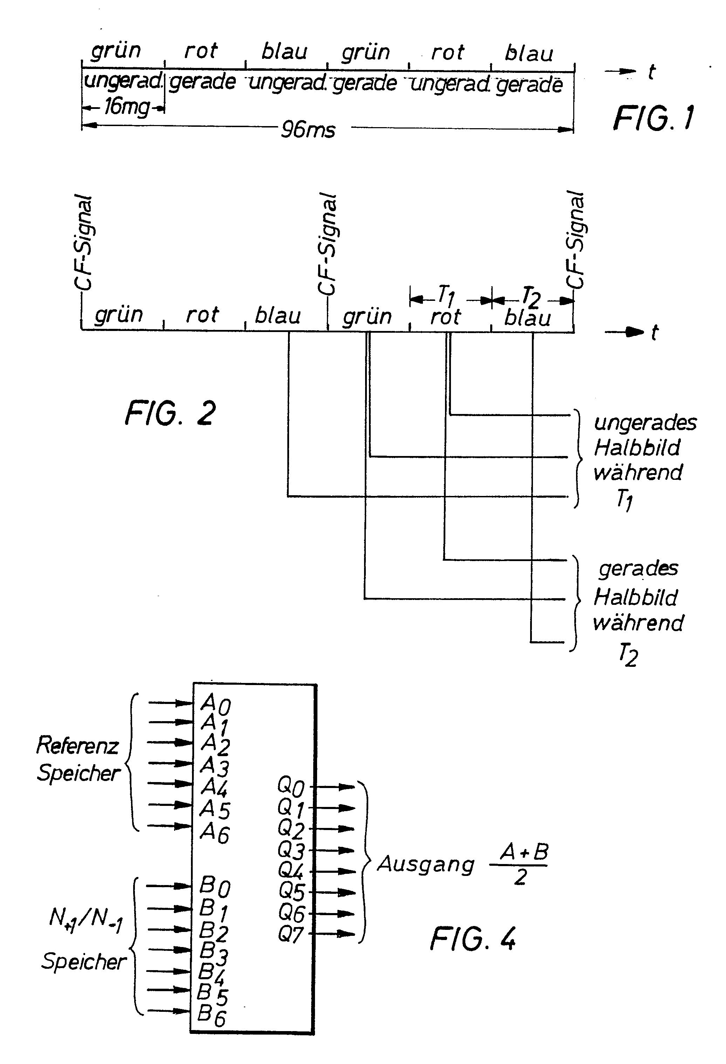

Wie aus der Darstellung nach Figur 1 hervorgeht, bestehen die Signal eines Vollbildes aus zum Beispiel durch entsprechende optische Farfbfilter getrennten, den Grundfarben Rot, Grün und Blau zugeordneten sechs Halbbildern, die als gerade bzw. ungerade Halbbilder zusätzlich gekennzeichnet sind. Innerhalb des jeweils der grünen Farbe zugeordneten Halbbildes ist darüber hinaus ein Farbrahmensynchronsignal in das zu einem Seriensignal verschachtelte, aus einem Luminanzsignal bestehende Signal, eingebaut. Aus der Darstellung nach Figur 1 kann sofort erkannt werden, daß jeweils drei zusammengehörende Signale durch die Halbbildtechnik verschiedenen Halbbildern gerade/ungerade zugeordnet sind und daß eine normgerechte Zuordnung nur eine Zusammenfassung von als gerade bzw. ungerade markierten Farbbildsignalen erlaubt. Das führt dann aber zu den schon erläuterten Farbnachzieheffekten.

Mit einer Aufbereitung der Farbsignale gemäß Figur 2 können die Farbnachzieheffekte weitgehend vermieden werden. Die Darstellung nach Figur 2 zeigt wieder die den Grundfarben Rot, Grün und Blau zugeordneten sechs Halbbilder eines Vollbides und das Aufbereiten dieser Signale zu Farbsignalen gerader bzw. ungerader Halbbilder. Innerhalb jedes Halbbildes wird das Signal für eine Farbe direkt aus einem Seriensignal abgeleitet, während die anderen beiden Signale durch Zwi-schenspeicherung des Seriensignals bzw. Zwi-schenspeicherung und Interpolation aus dem Seriensignal entstehen. Es kann sofort erkannt werden, daß damit für die Farbsignale jedes Halbbildes Speicherzeiten von 16 ms bzw. 32 ms benötigt werden. Nachzieheffekte für die Farben können daher nur bis zur Größenordnung von 32 ms auftreten, und daher als nicht mehr wahrnembar für das menschliche Auge angesehen werden.

Das erfindungsgemäße Aufbereiten der Farbsignale hat den Vorteil, daß das bekannte Farbfernsehsystem, ohne Systemänderungen auf der Aufnahmeseite übernommen werden kann, so daß auch die Vorteile bei der Signalübertragung erhalten bleiben. Für die Aufnahmekamera kann dabei eine mit wechselnden optischen Filtern versehene, zum Beispiel die unter Bezeichnung "Color-Wheel-Camera" bekannte Kamera, benutzt werden. Eine vorteilhafte Lösung ergibt sich jedoch dann, wenn für die Aufnahmekamera eine Halbleiterkamera, und zwar eine CCD-oder CMOS-Kamera der sogenannten Drei-Chip-Technik mit nachgeschaltetem Multiplexer benutzt wird. Diese Aufnahmekammera hat den Vorteil, ohne bewegte mechanische Teile auszukommen, so daß sich mit dieser Lösung auch eine Volumenverringerung und Gewichtseinsparung ergibt. Das Verschachteln der Farbsignale zu dem systembedingten Seriensignal wird hier mit dem den Farbchips nachgestalteten Multiplexer erzielt.

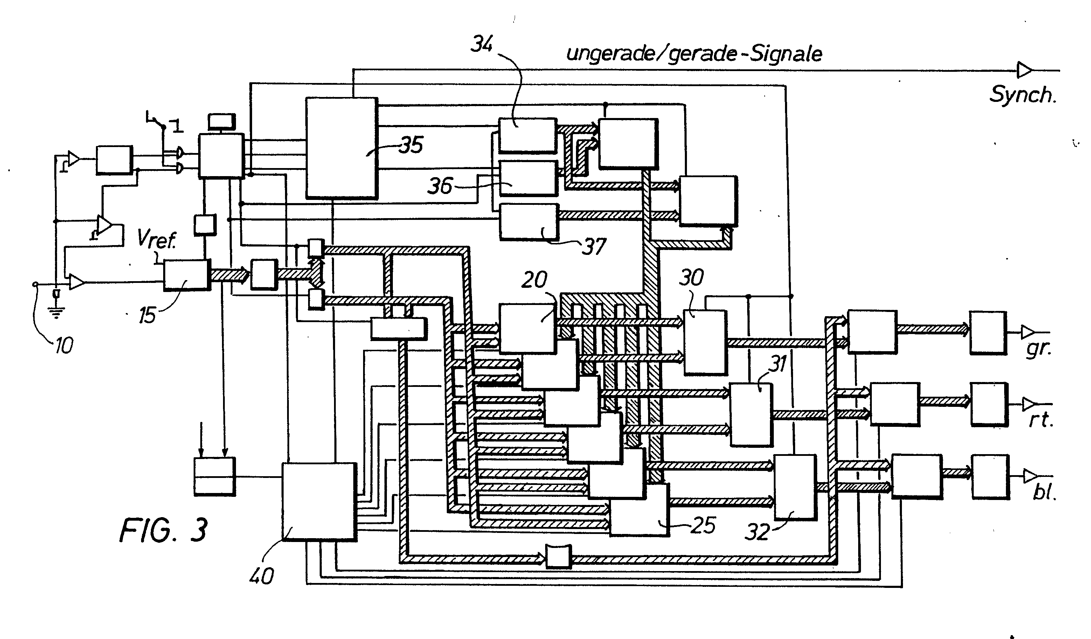

Zum Aufbereiten des empfangenen Seriensignals ist auf der Empfangsseite eine Dekodierschaltung, wie beispielsweise die in Figur 3 dargestellte, notwendig, damit aus dem Seriensignal die Farbsignale für die verschiedenen Systeme wie zum Beispiel NTSC, PAL oder SECAM erzeugt werden können. Die kurz als Dekoder bezeichnete Dekodierschaltung erhält das empfangene Seriensignal an einem Eingang 10. Der Dekoder ist konzipiert für Videosignale mit einer oberen Grenzfrequenz von 5 Mhz, daß heißt, der Dekoder ist in der Lage, Farbsignale gemäß der international genormten Bandbreite zu verarbeiten. Nach dem Abtasttheorem ergibt sich die Taktfrequenz für ein Bildelement (PIXEL) von

F >= 2,4 * 5 Mhz

und für einen praktischen Anwendungsfall wurde diese Frequenz auf 13,33 Mhz festgelegt. Jedes Bildelement wird daher innerhalb eines Zeitintervalls von 75 ns abgetastet. Wegen digitaler Zusatzdaten ergibt sich die Speicherzeit für eine Videozeile zu 64 ms - 6 ms = 58 ms. Die 6 ms sind für den Synchronimpulszeitraum notwendig. Pro Bildzeile ergeben sich daher 773 Bildelemente.

Der Dekoder gemäß Figur 3 schaltet das zugeleitete Seriensignal auf einen Analog-Digital-Wandler 15, wofür ein Wandler mit 7-Bit Auflösung zweckmäßigerweise einzusetzten ist. Das bedeutet, daß sich mit diesem Wandler 128 Graustufen zwischen den Schwarzpegel und dem Weißpegel darstellen lassen. Im Dekoder sind weiterhin sechs Halbbildspeicher 20,21...25 eingesetzt, wofür Speicherchips mit 256 KBit eingesetzt werden können. Da diese Speicher einen Speicherzyklus von 150 ns haben, wird die Datenrate durch den Demultipexer für die Videodatenübertragung auf 6 2/3 Mhz halbiert und auf zwei Datenbusleitungen A/B verteilt. Auf diesen Busleitungen beträgt die Datenrate nun 1 Bildelement pro 150 ms, was von den nachgeschalteten Speichern verarbeitet werden kann. Jeder der Halbblidspeicher 20,...25 besteht daher aus 2 * 7 Speicherchips, welche symmetrisch von den Busleitungen A bzw. B beaufschlagt werden. Die Speicher werden so betrieben, daß die Zeilenadressen der Zeilennummer eines Halbbildes entspricht und die Spaltenadresse der Pixelnummer innerhalb einer Zeile. Die Speicher werden über Multiplexer 30-32 abgefragt, so daß an den Ausgängen der Multiplexer wieder ein Signal mit der ursprünglichen Datenrate von 13,33 Mhz abnehmbar ist.

Die Synchronisation wird wie folgt gelöst:

Zunächst wird das empfangene Videosignal in Horizontal-und Vertikalsynchronimpulssignale zerlegt. Zusätzlich benötigte Signale, wie Signale zur Halbbilddarstellung gerade/ungerade, werden mittels eines fremdsynchronisierten Synchrongenerators 35 erzeugt. Dieser Synchrongenerator übernimmt bei Standbildern auch die Synchronisation als "Masterstufe". Zur Erzeugung der Pixeltaktrate werden die Taktrate des Analog-Digital-Wandlers 15 sowie zwei Pixeladresszähler 36, 37 benutzt. Um ein Ausreißen der Bildpunkte zu vermeiden, ist es notwendig die Pixeltaktrate so genau wie möglich mit dem Zeilensynchronimpuls zu starten. Mit einem maximalen Jitterimpuls" von 25 ns, was einem Viertel einer Bildpunktlänge entspricht, kann dies in einfacher Weise erreicht werden. Hierfür kann ein 40 Mhz Quarzsignal in einer Teilerkette entsprechend geteilt werden. Die hintere Flanke des Synchronimpulses bewirkt zunächst über ein Exklusiv-Oder-Glied und eine Riegelstufe, daß das vorliegende 40 Mhz-Signal falls erforderlich invertiert wird. Anschließend wird ein zentraler Einstellimpuls vom 40 Mhz-Signal abgeleitet, welcher eine Länge von 25 ns besitzt und nicht mit der Anstiegsflanke des 40 Mhz-Signals zusammenfällt. Dadurch erhält die eingesetzte Teilerkette das Einstellsignal mit genauem Zeitbezug zum Zeilensynchronimpuls. Da das 40 Mhz-Signal darüber hinaus, und zwar je nach Zeitpunkt des Einstellsignals auch invertiert wird, entspricht der verbleibende Jitterimpuls der Periode eines 40 Mhz-Signals, daß heißt, die Periode beträgt 25 ns.

Eine Matrixschaltung 40 übernimmt das Management für die Speichersteuerung, daß heißt, welcher Speicher aufgefüllt, ausgelesen oder interpoliert werden soll. Außerdem steuert diese Matrix denjenigen der RGB-Ausgänge, der direkt (ON-LINE) geschaltet wird. Zunächst wird in der Martix 40 das Farbrahmensynchronsignal dekodiert. Damit wird ein Farbzynchronzähler in eine Ausgangs stellung versetzt. In dieser Stellung werden die "Grün-Halbbilder" mit dem empfangenen Videohalbbild beschrieben. Darüber hinaus wird das "ON-LINE-VIDEOBILD" auf den "Grün-Ausgang" durchgeschaltet. Weiterhin wird eine bistabile Schaltstufe (Grün) mit der Information gerade/ungerade geladen. In der bistabilen Schaltstufe ist nun die Information für das "Grün-Halbbild" vorhanden, daß heißt, diese Information sagt aus, ob dieses Halbbild gerade oder ungerade ist. Überschrieben wird diese Information erst wieder bei dem nächsten grünen Halbbild. Der Inhalt der bistabilen Schaltstufe gibt daher Auskunft, ob die Information dieser Stufe für die entsprechende Farbe beim Auslesen aus den Zwischenspeichern zu interpolieren ist oder nicht. Die bistabile Schaltstufe wird daher zweckmäßigerweise "ungerade/gerade-Speicher" genannt. Jeder Grundfarbe ist ein derartiger Speicher zugeordnet.

Wenn bei einer Farbe Gleichheit zwischen Inhalt des gerade/ungerade-Speichers und dem aktuellen gerade/ungerade Signal besteht, dann wird nicht interpoliert. Bei Ungleichheit dieser Signale erfolgt eine Interpolation mit der Schaltung gemäß Figur 4. Je nachdem ob von ungerade oder umgekehrt interpoliert werden soll, wird ein N + 1 / N - 1 -Speicher mit einem einwertigen positiven oder negativen OFFSET-Signal in der Zeilenadresse ausgelesen. Interpoliert wird nur bei einem Zeilenversatz. Wenn beide Speicher mit gleichen Daten geladen sind, sind die Daten der Datenbusleitung A/B bei gleicher Zeilenadresse gleich. In diesem Fall werden die Daten gelesen, wie sie eingegeben wurden.

Der Dekodierer für das empfangene Seriensignal kann so aufgebaut werden, daß dieser wahlweise in konventioneller Betriebsart bzw. im Interpolationsbetrieb betrieben werden kann. Es ist daher auf einfache Weise möglich, die Reduzierung des sonst auftretenden Farbnachzieheffektes vorzuführen.

Zeilen-und Bildpunkte mit digitalen Zusatzinformationen werden grundsätzlich auf direktem Weg zu allen drei RGB-Ausgängen durchgeschaltet und erscheinen daher gemäß ihrer digitalen Natur als Schwarz-Weiß-Signal. Außerdem werden die digitalen Zusatzinformationen in alle Speicher eingegeben. Wenn der Dekoder in die Stellung "Standbild" versetzt wird, dann erscheinen diese Zusatzinformation auch dort, wo sie eingegeben wurden. Neben den RGB-Ausgängen ist der Dekoder auch mit einem Ausgang für die amerikanische NTSC-Norm versehen. Die erzeugten RGB-Videodaten können dann zum Einsatz im Gebiet europäischer Fernsehnormen über Datenbusleitungen entsprechenden Normwandlern zugeleitet werden.

Das erfindungsgemäße System hat den Vorteil Farbbilder nach Aufnahme und Übertragung ohne Farbverfälschung und Qualitätsminderung durch einen Farbträger wiedergeben zu können. Dabei lassen sich auf der Empfangsseite auch drei unabhängige Monochrom-Farbbilder wiedergeben, wodurch auch räumliche Darstellung möglich werden. Außerdem gestattet dieses System bildunabhängige Zusatzinformationen zu übertragen, wie z.B. Sprache, Zeitcodeinformationen, Kamerakennungssignale und zugehörige Betriebsdaten. Ferner ist es auch möglich, und zwar insbesondere in Bildaustastlücken, z.B. freier Zeilen, Video-Bilddaten unabhängig und/oder simultan zu übertragen. Hiermit können Daten von Standbildern in eine laufende Videoübertragung eingekoppelt und am Empfangsort mit einem dazu vorgesehenen Speicher für eine nachfolgende Darstellung aufgebaut werden.

**Ansprüche**

1. Farbfernsehsystem zur Aufnahme. Übertragung und Wiedergabe von Fernsehbildern, insbesondere zur Aufnahme im Weltraum und Wiedergabe auf Erden, mit einer Aufnahmekamera. deren bestimmten Normfarben und Halbbildern zugeordnete Luminizenzsignale als Seriensignal verschachtelt mit einem an bestimmter Stelle eingesetzten Farbrahmensynchronsignal übertragen und auf der Empfangsseite in ein Fernsehsignal bestimmter Norm umgesetzt werden, dadurch gekennzeichnet, daß das empfangene Seriensignal in einem Dekodierer durch Zwischenspeichern und Verarbeiten in ein den wechselden Halbbildern zugeordnetes Normsignal der Farben Rot, Grün und Blau gewandelt wird, wobei der Dekodierer die Farbsignale für die jeweiligen Halbbilder durch ein vom Seriensignal direkt abgeleitetes Signal, ein zwischengespeichertes und interpoliertes Signal sowie durch ein zwischengespeichertes Signal erzeugt wird.

2. Farbfernsysystem nach Anspruch 1, dadurch gekennzeichnet, daß für die Aufnahmekamera eine Halbleiterkamera (CCD oder CMOS) der sog. Drei-Chip-Technik eingestzt ist, deren RGB-Farbsignale mit einem Multiplexer in ein verschachteltes Seriensignal umgesetzt werden.

3. Farbfernsysystem nach Anspruch 1 oder 2, dadurch gekennzeichnet, daß der Dekodier einen 7-Bit Analog-Digital-Wandler (15) aufweist, dessen digitale Signale über einen Demultiplexer auf zwei Datenleitungen zum Laden von sechs den Halbbildern zugeordneten Zwischenspeichern (20,21..25) aufgeteilt werden.

4. Farbfernsehsystem nach Anspruch 3, dadurch gekennzeichnet, daß der Demultiplexer die Datenrate auf 6 2/3 MHz halbiert.

5. Farbfernsehsystem nach Anspruch 3 oder 4, dadurch gekennzeichnet, daß die Zwischenspeicher (20,..25) mit Speicherbausteinen von 256 KBit bestückt sind, in denen die Zeilenadressen den Zeilennummern eines Halbbildes und die Spaltenadressen den Bildunmmern (Pixelnummer) innerhalb einer Zeile entsprechen.

6. Farbfernsehsystem nach Anspruch 3 bis 5, dadurch gekennzeichnet, daß die Zwischenspeicher (20,..25) durch Multiplexer (30,31,32) abgefragt werden. deren Ausgänge die Farbsignale mit ursprünglicher Datenrate wieder ausgeben.

7. Farbfernsehsystem nach Anspruch 3 bis 6, dadurch gekennzeichnet, daß die erforderlichen Synchronsignal durch Zerlegung des empfangenen Seriensignals in Videosignal und Synchronsignale und Synchronisation eines Synchrongenerators (35) erzeugt werden.

8. Farbfernsehsysystem nach Anspruch 3 bis 7, dadurch gekennzeichnet, daß die Taktrate für die Bildpunkte (Pixel) durch den Takt des Analog-Digital-Wandlers (15) sowie davon gesteuerten Bildpunktadressenzählern (36,37) bestimmt wird.

9. Farbfernsehsystem nach Anspruch 3 bis 8, dadurch gekennzeichnet. daß ein durch den Synchrongenerator (35) gesteuerter Zeilenzähler (34) gemeinsam mit den Bildpunktzählern (36,37) durch zwei Adressenmultiplexer (38,39) zum Bildpunkttakten der Zwischenspeicher (2o,21..25) abgefragt werden.

0 243 687

FIG. 1

FIG. 2

ungerades
Halbbild
während
$T_1$

gerades
Halbbild
während
$T_2$

FIG. 4

Referenz
Speicher

$N_{+1}/N_{-1}$
Speicher

Ausgang $\frac{A+B}{2}$

FIG. 3

ungerade/gerade-Signale

Synch.

34

35

36

37

Vref.

15

10

20

30

31

32

25

40

gr.

rt.

bl.

0 243 687